**Europäisches Patentamt**

**European Patent Office**

**Office européen des brevets**

(11) Veröffentlichungsnummer : **0 337 158 B1**

(12) **EUROPÄISCHE PATENTSCHRIFT**

(45) Veröffentlichungstag der Patentschrift :
**26.02.92 Patentblatt 92/09**

(51) Int. Cl.⁵ : **B65C 9/00**, F16H 55/14

(21) Anmeldenummer : **89104895.1**

(22) Anmeldetag : **18.03.89**

(54) **Trägerelement für die Eingriffsglieder eines Kurvengetriebes eines Antriebes für Entnahmeelemente in einer Etikettierstation sowie mit einem Trägerelement ausgerüstete Etikettierstation.**

(30) Priorität : **09.04.88 DE 3811868**
**08.02.89 DE 3903676**

(43) Veröffentlichungstag der Anmeldung :
**18.10.89 Patentblatt 89/42**

(45) Bekanntmachung des Hinweises auf die
Patenterteilung :
**26.02.92 Patentblatt 92/09**

(84) Benannte Vertragsstaaten :
**DE ES FR IT**

(56) Entgegenhaltungen :
**FR-A- 2 129 004**
**FR-A- 2 437 986**
**GB-A- 2 095 639**
**GB-A- 2 143 928**

(73) Patentinhaber : **ETI-TEC MASCHINENBAU GMBH**
**Feldheider Strasse 45**
**W-4006 Erkrath 2 (DE)**

(72) Erfinder : **Zodrow, Rudolf**
**Lichtstrasse 37**
**W-4000 Düsseldorf (DE)**

## Beschreibung

Die Erfindung bezieht sich auf ein auf einer Welle gelagertes Trägerelement für die Eingriffsglieder eines Kurvengetriebes insbesondere eines Antriebes für ein Etikettenentnahmeelement in einer Etikettierstation.

Bei Etikettierstationen ist es zur Erzielung eines möglichst geräuscharmen Laufs bekannt, an verschiedenen Stellen Teile der Etikettierstation über eine dünne Einlage aus elastischen Material miteinander zu verbinden. Um einerseits die Geräusche zu dämpfen und andererseits Toleranzen auszugleichen, ist eine Etikettierstation bekannt, bei der jedes Entnahmeelement über ein Triebstockgetriebe aus einem an seiner Innenseite zwei Triebstockverzahnungen aufweisenden Ringkörper und zwei damit in Eingriff stehenden, auf gegenüberliegenden Seiten des Trägerelementes angeordneten Triebstöcken als Eingriffsglieder angetrieben wird (US-PS 4298422). Jedes Eingriffsglied ist mit einer geräuschdämpfenden und Toleranzen ausgleichenden Einlage ausgerüstet. Die Einlage ist in Form einer Büchse zwischen dem inneren Lagerteil und dem äußeren Laufteil einer Rolle eingesetzt, mit der jeder Triebstock bestückt ist. Eine derartige dämpfende Einlage für ein Kurvengetriebe ist nicht optimal, weil die Belastung der auf Zapfen gelagerten Rollen der Eingriffsglieder wegen der kleinen Fläche der Einlage groß ist. Dies gilt insbesondere dann, wenn nur wenige, z.B. nur zwei Rollen im Eingriff sind. Wegen der aus Gründen der präzisen Führung möglichst dünnen Einlage, kann es bei dieser großen Belastung dazu kommen, daß die Dämpfungswirkung ganz verloren geht, weil der Lagerteil und der Laufteil zu Anlage kommen. Hinzu kommt, daß bei einer an jedem Eingriffsglied einzeln verwirklichten Dämpfung eine bei Belastung entstehende Exentrizität des einzelnen Eingriffsgliedes sich negativ auf die gewünschte präzise Drehbewegung des Entnahmeelementes auswirkt.

Aufgabe der Erfindung ist es, ein Trägerelement der eingangs geannten Art zu schaffen, das in seiner Dämpfungswirkung und seiner präzisen Führung verbessert ist.

Diese Aufgabe wird erfindungsgemäß dadurch gelöst, daß das Trägerelement aus einem Körper und einem darin mit allseitigem Abstand angeordneten inneren Körper besteht, wobei der äußere Körper radial nach innen gerichtete Klauen und der innere Körper radial nach außen gerichtete, zwischen den nach innen gerichteten Klauen liegende Klauen aufweist und der Zwischenraum zwischen den beiden Körpern mit einer Einlage aus elastischem Material ausgefüllt ist, und daß die nach innen gerichteten Klauen des äußeren Körpers für die Bestückung mit den Eingriffsgliedern eingerichtet sind.

Das erfindungsgemäße Trägerelement ist wegen der formschlüssig ineinandergreifenden Klauen in der Lage, große Drehmomente zu übertragen, ohne daß die präzise Führung darunter leidet. Da die Eingriffsglieder auf den nach innen gerichteten Klauen angeordnet sind, ergeben sich große radiale Abstützflächen. Deshalb kann die Einlage verhältnismäßig dünn sein, ohne daß die Einlage überlastet wird und durch unmittelbaren Kontakt des äußeren, inneren Körpers die Dämpfungswirkung verloren geht. Da das Trägerelement selbst das Dämpfungsmittel in Form der Einlage aus elastischem Material aufweist, brauchen die einzelnen Eingriffsglieder nicht länger einzeln eine solche Einlage aufzuweisen. Das hat den Vorteil, daß die geometrische Zuordnung der vom äußeren Teil getragenen Eingriffsglieder zueinander starr ist. Daraus resultiert, daß sie sich nur gemeinsam als Einheit exentrisch auf der Welle verlagern können, was für die präzise Führung des Trägerelementes bei der Drehbewegung von Vorteil ist.

Nach einer Ausgestaltung der Erfindung ist es vorgesehen, daß die Lücken zwischen den Klauen des äußeren Körpers durch eine Stirnwand verschlossen sind und daß zwischen dieser Stirnwand und den ihr zugewandten Stirnflächen der Klauen des inneren Körpers eine elastische Einlage angeordnet ist. Dadurch ergibt sich nicht nur eine gute Abstützung in axialer Richtung, sondern auch eine Verbesserung der Winkelsteifigkeit.

Zur Verbesserung der Maßhaltigkeit in radialer Richtung können zwischen beiden Körpern axial sich erstreckende Ringflächen vorgesehen sein, zwischen denen die elastische Einlage angeordnet ist. Insbesondere können die beiden Ringflächen von koaxial übereinander angeordneten, hülsenförmigen Ansätzen gebildet sein. In Weiterbildung dieser Ausgestaltung können die Ringflächen stufenlos in die radial innenliegenden Flächen der nach innen gerichteten Klauen des äußeren Körpers und die zwischen den nach außen gerichteten Klauen des inneren Körpers liegenden und die Klauen des äußeren Körpers aufnehmenden Zwischenräume übergehen. Durch diese Ausgestaltung ergibt sich im Bereich der Eingriffsglieder eine über die gesamte axiale Länge des äußeren und inneren Körpers und der hülsenförmigen Ansätze stufenlose, durchgehende Abstützung unter Einschluß der elastischen Einlage.

Zur Verbesserung der axialen Sicherung können mehrere radiale Ausnehmungen im inneren und äußeren Körper vorgesehen sein, die jeweils von einem mit der elastischen Einlage verbundenen Propfen aus elastischem Material ausgefüllt sind. Vorzugsweise sind die Ausnehmungen am Außenumfang des Trägerelementes angeordnet. Weiter ist es von Vorteil, wenn die Ausnehmungen paarweise miteinander fluchten.

Das Trägerelement kann auf verschiedene Art und Weise das Drehmoment auf das Entnahmeelement übertragen. So ist es möglich, daß das Drehmoment vom Trägerelement unmittelbar auf die Antriebswelle des Entnahmeelementes übertragen wird, auf der das Trägerelement sitzt. Es ist allerdings auch möglich, daß das Trägerelement auf einer als Lagerwelle ausgebildeten Welle sitzt und das Drehmoment über ein Zahnradgetriebe auf die Welle des Entnahmelementes übertragen wird. In diesem Fall kann der äußere Körper ein Antriebsritzel tragen. Bei dieser Ausgestaltung ist somit das Antriebsritzel ebenfalls gegenüber der im Maschinengestell gelagerten Lagerwelle entkoppelt.

Wegen der präzisen Führung bei gleichzeitiger guter Dämpfungswirkung eignet sich das Trägerelement nicht nur für mit kurzem Hebelarm an ihm angreifende Eingriffsglieder; sondern auch für die Bestückung von Eingriffsgliedern, die mit langem Hebelarm an ihm angreifen. Deshalb ist es im Rahmen der Erfindung möglich, das Trägerelement wahlweise mit in einer oder zwei Ebenen angeordneten Eingriffsgliedern zu bestücken. Die Erfindung betrifft demnach in einer weiteren Ausgestaltung eine Etikettierstation für Gesenstände, insbesondere Flaschen, mit mehreren, längs einer Bahn hintereinander angeordneten Stationen, und zwar einer Beleimungsvorrichtung, einer Etikettnevorratsstation und einer Etikettenübertragungsstation, sowie mit mindestens einem auf einem sich drehenden Träger drehbar gelagerten und bei jeder Umdrehung des Trägers an den Stationen vorbeibewegten Entnahmeelement für die Etiketten, das jeweils eine nach außen gewölbte, sich auf dem jeweils vorderen Etikett und den anderen Stationen abwälzende Aufnahmefläche für das Etikett aufweist, wobei als Antrieb für jedes Entnahmeelement ein Kurvengetriebe vorgesehen ist, das aus einer für alle Entnahmeelemente gemeinsamen, ortsfesten Doppelkurve und einem oder mehreren damit zusammenwirkenden Eingriffsgliedern besteht, die auf der Antriebswelle oder einer mit ihr gekuppelten Lagerwelle mittels des Trägerelementes gelagert sind und durch Formschluß mit der Doppelkurve bei Drehung des Trägers die Drehbewegung eines jeden Entnahmeelementes sichern. Bei einer solchen Etikettiermaschine ist erfindungsgemäß vorgesehen, daß die Antriebswelle bzw. Lagerwelle vor der Ebene des oder der Eingriffsglieder endet und daß das Trägerelement für die wahlweise Bestückung mit einem einzigen Eingriffsglied, das in eine als Nutkurve ausgebildete Doppelkurve eingreift, oder mit zwei zur Achse der Antriebs- oder Lagerwelle etwa diametral gegenüberliegenden Eingriffsgliedern eingerichtet ist, die mit einer ersten einseitigen Kurve der Doppelkurve zusammenwirken und ein Brückenglied tragen, das zwischen der ersten Kurve und einer zweiten, zur ersten Kurve im Abstand angeordneten Kurve angeordnet ist und mit dieser zweiten Kurve zusammenwirkende, zu den Eingriffsgliedern der ersten Kurve um etwa 90° versetzte Eingriffsglieder trägt.

Eine solche Etikettierstation, die in der Ausführung der einen Alternative mit einer Nutkurve für eine Verschwenkbewegung der Entnahmeelemente und in der zweiten Alternative mit den beiden einseitigen Kurven für eine gleichsinnige Drehbewegung der Entnahmeelemente eingerichtet ist, gewährleistet in beiden Alternativen eine präzise Führung, da selbst bei großen Hebelarmlängen wegen der möglichen dünnen elastischen Einlage bei großflächiger Abstützung große Momente aufgenommen werden können, ohne daß sich der äußere Körper gegenüber dem inneren Körper unzulässig stark verlagert.

Im folgenden wird die Erfindung anhand einer Ausführungsbeispiel darstellenden Zeichnung näher erläutert. Im einzelnen zeigen

Figur 1 ein Trägerelement für Eingriffsglieder eines als Triebstockverzahnung ausgebildeten Kurvengetriebes in stirnseitiger Ansicht,
Figur 2 das Trägerelement gemäß Figur 1 im Schnitt nach der Linie A-B der Figur 1,
Figur 3 das Trägerelement gemäß Figur 1 im Schnitt nach der Linie C-D der Figur 2.
Figur 4 ein anders Trägerelement für Eingriffsglieder eines herkömmlichen Kurvengetriebes in stirnseitiger Ansicht,
Figur 5 das Trägerelement gemäß Figur 4 im Schnitt nach der Linie E - F der Figur 4 ,
Figur 6 eine Etikettierstation in schematischer Darstellung in Aufsicht mit einem in einer Nutkurve geführten Eingriffsglied,
Figur 7 die Etikettiermaschine gem. Figur 6 im Schnitt nach der Linie I - I der Figur 6,
Figur 8 eine Etikettiermaschine in schematischer Darstellung in Aufsicht mit an zwei einseitigen Außenkurven geführten Eingriffsgliedern **und**
Figur 9 die Etikettiermaschine gemäß Figur 8 im Schnitt nach der Linie II - II der Figur 8.

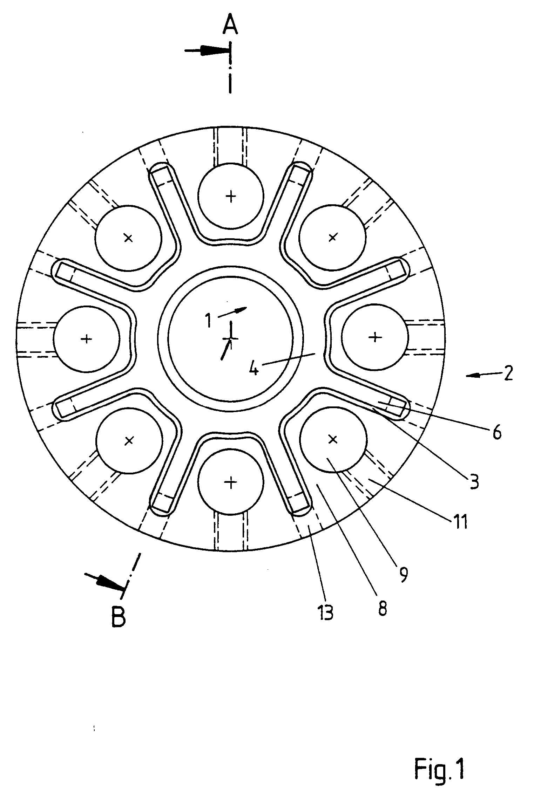

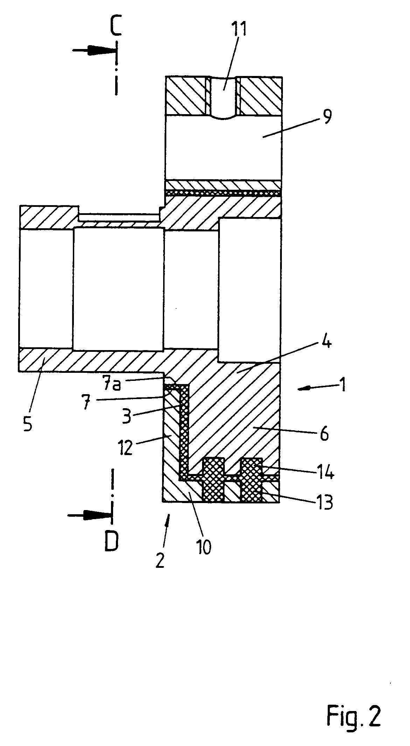

Das Trägerelement gemäß den Figuren 1 - 3 besteht aus einem inneren Körper 1 und einem äußeren Körper 2, die voneinander einen allseitigen Abstand haben. In dem Zwischenraum zwischen den beiden Körpern 1,2 befindet sich eine Einlage 3 aus elastischem Material.

Der innere Körper 1 ist zur Befestigung auf einer Antriebswelle eines Entnahmeelementes für Etiketten eingerichtet. Zu diesem Zweck weist er einen Mittelteil 4 und eine stirnseitig daran angesetzte Hülse 5 auf. Der Mittelteil 4 trägt eine Vielzahl von umfangsmäßig verteilten radial nach außen gerichteten Klauen 6. Die Breite der Klauen 6 ist wesentlich kleiner als der Abstand zwischen diesen Klauen 6.

Der äußere Körper 2 hat die Grundform eines Topfes mit einer mittigen Öffnung 7, durch den der Mittelteil 4 mit der Hülse 5 ragt. Der äußere Körper 2 weist radial nach innen gerichtete Klauen 8 auf, die zwischen den Klauen 6 des inneren Körpers 1 liegen. In jeder dieser inneren Klauen 8 ist eine Bohrung 9 vorgesehen, die zur Aufnahme des Lagerzapfens eines Eingriffsgliedes dient. Zur axialen Sicherung des in die Bohrung 9 eingesetzten Lagerzapfens dient ein Schraubenbolzen, für den in der Außenwand 10 des topfförmigen äußeren Körpers 2 ein radiales Gewindeloch 11 vorgesehen ist. An der der Büchse 5 benachbarten Stirnseite weist der äußere Körper 2 eine Stirnwand 12 auf, die die Lücken zwischen den einzelnen Klauen 8 überdecken.

Wie aus den Zeichnungen zu entnehmen, ist allseitig zwischen dem inneren und äußeren Körper 1,2 , also zwischen den ineinandergreifenden Klauen 6,8, zwischen der Stirnwand 12 und den ihr zugewandten Stirnseiten der Klauen 6 und zwischen der inneren Ringfläche der mittigen Öffnung 7 im äußeren Körper 2 und der äußeren Ringfläche 7a des inneren Körpers 1, ein Zwischenraum vorgesehen, der von der elastischen Einlage 3 ausgefüllt wird, die verhältnismäßig dünn ist. Dadurch ergibt sich eine großflächige Abstützung, die die auftretenden Kräfte in allen Achsen ohne Gefahr der Überlastung bei Aufrechterhaltung der Dämpfungswirkung übernehmen kann. Zur axialen Sicherung sind im Bereich der Klauen 6 des inneren Körpers 1 radiale Bohrungen bzw. Sacklöcher 13, 14 vorgesehen, die paarweise miteinander fluchten und von dem elastischen Material der Einlage ausgefüllt sind. Das elastische Material der Einlage 3 wird gemeinsam mit dem Material für die Bohrungen und Sacklöcher 13, 14 durch Einspritzen eingebracht.

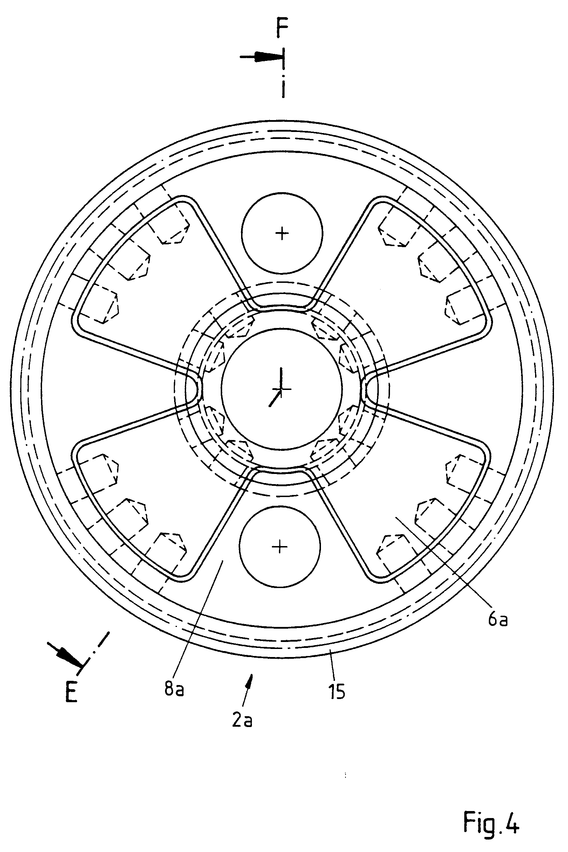

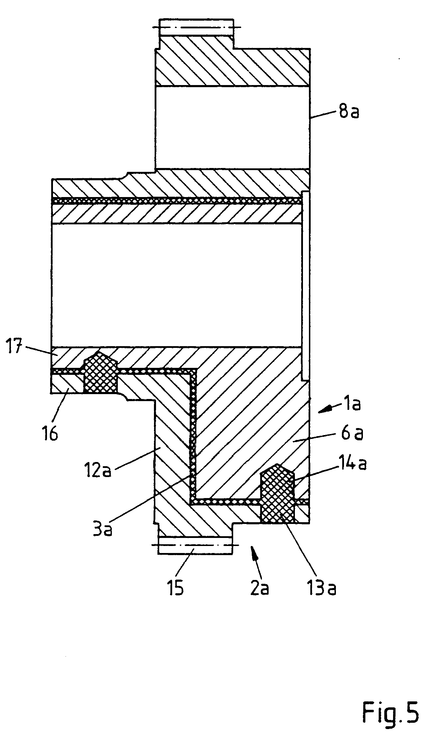

Das in den Figuren 4 und 5 dargestellte Trägerelement hat prinzipiell den gleichen Aufbau wie das in den Figuren 1 bis 3 dargestellte Trägerelement, so daß nur auf die Unterschiede eingegangen zu werden braucht.

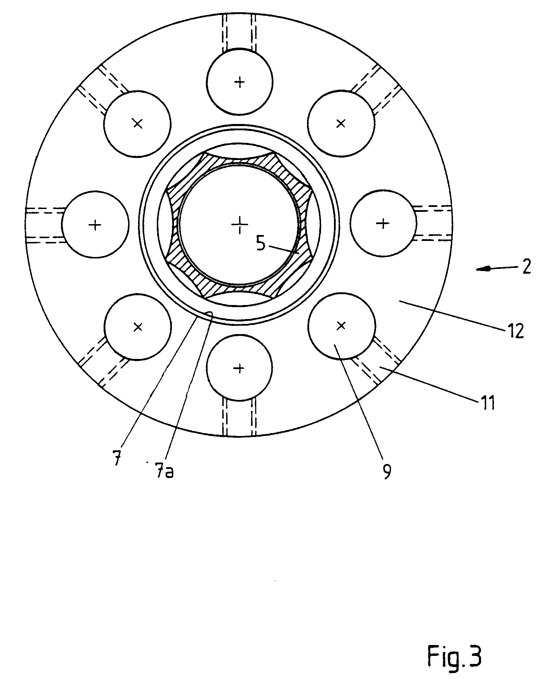

So sind nur zwei diametral gegenüberliegende Klauen 8a des äußeren Körpers 2a für die Bestückung mit Eingriffsgliedern ausgebildet. Die Anzahl der ineinandergreifenden, nach innen gerichteten Klauen 8a und nach außen gerichteten Klauen 6a ist auf jeweils vier reduziert. Darüber hinaus trägt der äußere Körper 2a an seiner Peripherie eine Verzahnung, so daß das Trägerelement gleichzeitig als Antriebsritzel wirksam werden kann. Schließlich werden die koaxial übereinanderliegenden Ringflächen des äußeren Körpers 2a und des inneren Körpers 1a von koaxial übereinanderliegenden hülsenförmigen Ansätzen 16,17 des äußeren und inneren Körpers 2a,1a gebildet. Im Vergleich zu den inneren Ringflächen beim Ausführungsbeispiel der Figuren 1 und 3 sind die Ringflächen wesentlich vergrößert, wodurch die Winkelsteifigkeit der beiden Körper 1a,2a erhöht wird.

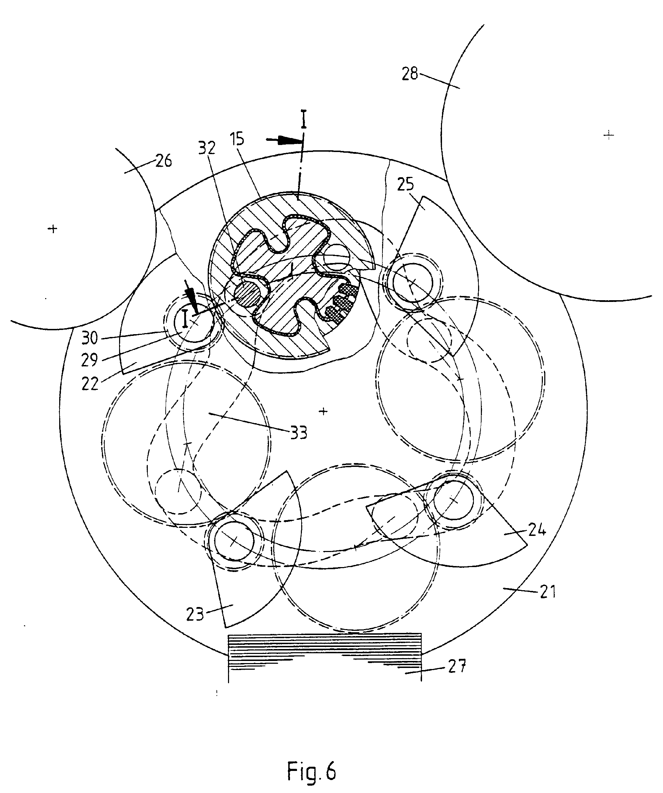

Die Figuren 6 bis 9 zeigen eine Etikettierstation mit dem beschriebenen Trägerelement, das wahlweise für die Bestückung mit einem einzigen Eingriffsglied oder mit zwei Paar Eingriffsgliedern eingerichtet ist. Bei beiden Ausführungen besteht die Etikettierstation aus einem angetriebenen, sich drehenden Träger 21, darauf verschwenkbar oder drehbar gelagerten Entnahmeelementen 22 bis 25 und am Umfang des Trägers 21 angeordneten Stationen, nämlich einer Leimwalze 26, einem Etikettenkasten 27 und einem Greiferzylinder 28. Die Entnahmeelemente 22 bis 25 werden bei Drehung des Tragers 21 von einem Kurvengetriebe derart ungleichförmig angetrieben, daß sie sich bei Drehung des Trägers 21 an den einzelnen Stationen 26 bis 28 abwälzen.

Jedes Entnahmeelement 22 ist mittels einer Lagerwelle 29 auf dem Träger 21 gelagert. Auf der Lagerwelle 29 sitzt ein Ritzel 30, das mit einem zweiteiligen Zahnrad 15, 15a in Eingriff steht, von dem in den Figuren 4 und 5 nur das Teil 15 dargestellt ist. Die zweiteilige Ausführung hat den Zweck, die beiden Teile gegeneinander etwas zu versetzen, um eine spielfreie Einstellung des Eingriffes zu erreichen Das das zweiteilige Zahnrad 15,15a umfassende Trägerelement 2a sitzt drehfest auf einer im Träger 1 gelagerten Antriebswelle 31.

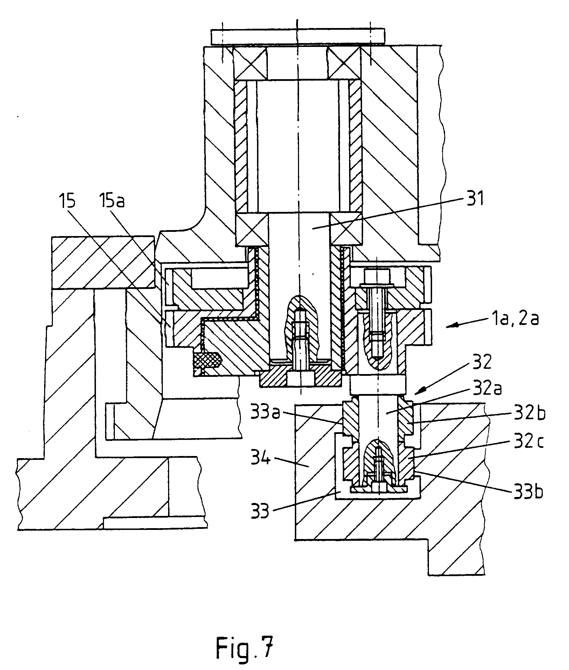

Bei dem Ausführungsbeispiel der Figuren 6 und 7 ist das Trägerelement mit einem einzigen Eingriffsglied 32 bestückt, das auf einem Lagerzapfen 32a zwei übereinander angeordnete Rollen 32b,32c trägt. Das Eingriffsglied 32 greift in eine Nutkurve 33 eines ortsfesten angeordneten Kurventrägers 34 ein. An gegenüberliegenden Flanken 33a,33b sind die beiden Rollen 32b,32c einseitig geführt.

Bei Drehung des Trägers 21 wird das Trägerelement und damit auch das Entnahmeelement 22 entsprechend dem Verlauf der Nutkurve 33 derart verschwenkt, daß es sich an den einzelnen Stationen 26 bis 28 abwälzt und dabei beleimt wird, ein Etikett entnimmt und das entnommene Etikett an den Greiferzylinder 28 überträgt.

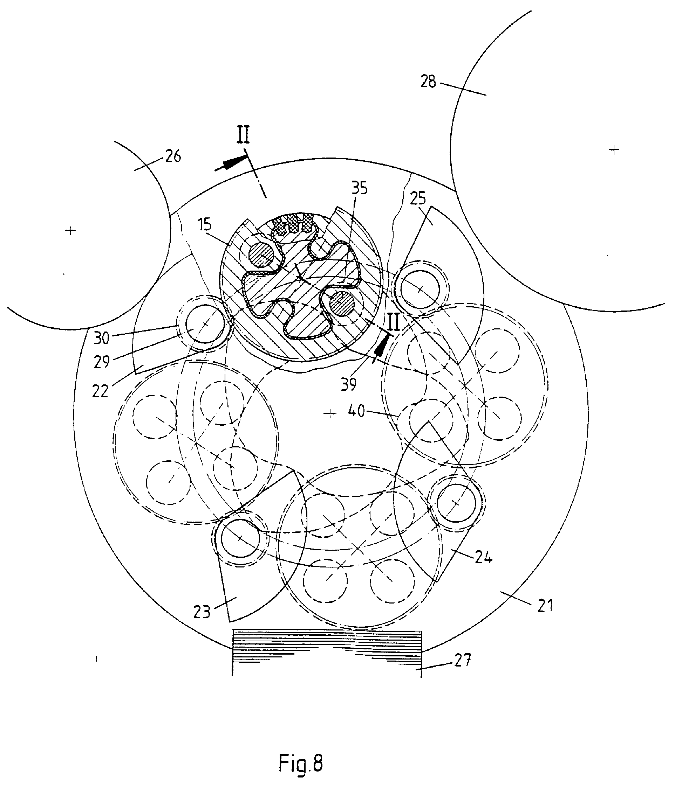

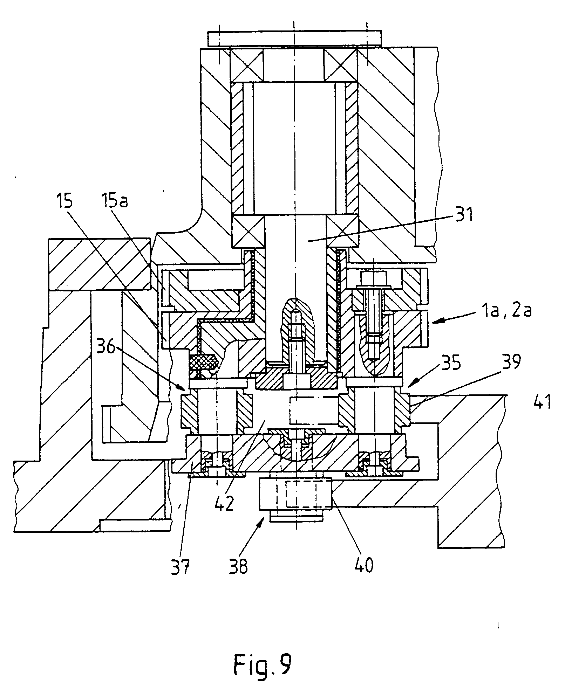

Das Ausführungsbeispiel der Figuren 8 und 9 unterscheidet sich von dem der Figuren 6 und 7 darin, daß das Trägerelement mit zwei Eingriffsgliedern 35,36 bestückt ist, die ein Brückenglied 37 tragen, das ebenfalls mit zwei Eingriffsgliedern 38 bestückt ist, die zu den Eingriffsgliedern 35,36 um etwa 90° versetzt sind. In Figur 9 ist nur eines der beiden Eingriffsglieder dargestellt. Den beiden Paaren von Eingriffsgliedern 35,36 und 38 sind zwei übereinander und mit Abstand voneinander angeordnete einseitige Außenkurven 39,40 eines gemeinsamen ortsfesten Kurventrägers 41 zugeordnet. In dem Zwischenraum zwischen den beiden Außenkurven 39,40 befindet sich das Brückenglied 37. Die beiden Außenkurven (39,40) haben die Grundform von eingebuchteten Ovalen und sind zueinander kreuzweise angeordnet. Mit einer solchen Ausführung des Kurvengetriebes wird bei Drehung des Trägers 21 erreicht, daß das Trägerelement und damit auch das Entnahmeelement gleichsinnig, aber ungleichförmig gedreht wird, so daß es sich bei Drehung des Trägers 21 an den einzelnen Stationen 27 bis 28 abwälzt. Wegen des Brückengliedes 37 können die Außenkurven 39,40 voll ausgebildet werden, so daß unter Berücksichtigung des Bewegungsgesetzes an jeder Stelle des Umlaufs das Trägerelement und damit das Entnahmeelement 22 eindeutig geführt ist. Das Brückenglied 37 erlaubt es, daß die obere Außenkurve 39 bis in den Bereich 42 der Achse der Antriebswelle 31 hineinreichen kann.

**Patentansprüche**

1. Auf einer Welle (31) gelagertes Trägerelement für die Eingriffsglieder (32,35,36,38) eines Kurvengetriebes, insbesondere eines Antriebes für ein Etikettenentnahmeelement (22 bis 25) in einer Etikettierstation, **dadurch gekennzeichnet,** daß das Trägerelement aus einem äußeren Körper (2,2a) und einem darin mit allseitigen Abstand angeordneten inneren Körper (1,1a) besteht, wobei der äußere Körper (2,2a) radial nach innen gerichtete Klauen (8,8a) und der innere Körper (1,1a) radial nach außen gerichtete, zwischen den nach innen gerichteten Klauen (8,8a) liegende Klauen (6,6a) aufweist und der Zwischenraum zwischen den beiden Körpern (1,1a,2,2a) mit einer Einlage (3,3a) aus elastischem Material ausgefüllt ist, und daß die nach innen gerichteten Klauen (8,8a) des äußeren Körpers (2,2a) für die Bestückung mit Eingriffsgliedern (32,35,36,38) eingerichtet sind.

2. Trägerelement nach Anspruch 1, **dadurch gekennzeichnet,** daß die Lücken zwischen den Klauen (8,8a) des äußeren Körpers (2,2a) durch eine Stirnwand (12,12a) verschlossen sind und daß zwischen dieser Stirnwand (12,12a) und den ihr zugewandten Stirnflächen der Klauen (6,6a) des inneren Körpers (1,1a) die elastische Einlage (3,3a) angeordnet ist.

3. Trägerelement nach Anspruch 1 oder 2, **dadurch gekennzeichnet,** daß zwischen beiden Körpern (1,1a,2,2a) axial sich erstreckende Ringflächen vorgesehen sind, zwischen denen die elastische Einlage (3,3a) angeordnet ist.

4. Trägerelement nach Anspruch 3, **dadurch gekennzeichnet,** daß die Ringflächen von koaxial übereinander angeordneten, hülsenförmigen Ansätzen (16,17) des inneren und äußeren Körpers (1,1a,2,2a) gebildet sind.

5. Trägerelement nach Anspruch 3 oder 4, **dadurch gekennzeichnet,** daß die Ringflächen stufenlos in die radial innen liegenden Flächen der nach innen gerichteten Klauen (8a) des äußeren Körpers und die zwischen den nach außen gerichteten Klauen (6a) des inneren Körpers (1a) liegenden und die Klauen (8a) des äußeren Körpers (2a) aufnehmenden Zwischenräume übergehen.

6. Trägerelement nach einem der Ansprüche 1 bis 5, **dadurch gekennzeichnet,** daß mehrere radiale Ausnehmungen (13,13a,14,14a) im inneren und äußeren Körper (1,1a,2,2a) vorgesehen sind, die jeweils von einem mit der elastischen Einlage (3,3a) verbundenen Propfen aus elastischem Material ausgefüllt sind.

7. Trägerelement nach Anspruch 6, **dadurch gekennzeichnet,** daß die Ausnehmungen (13,13a,14,14a) mit dem Propfen am Außenumfang des Trägerelementes vorgesehen sind.

8. Trägerelement nach Anspruch 6 oder 7, **dadurch gekennzeichnet,** daß die Ausnehmungen (13,13a,14,14a) paarweise miteinander fluchten.

9. Trägerelement nach einem der Ansprüche 1 bis 3, **dadurch gekennzeichnet,** daß der äußere Körper (2) ein Antriebsritzel (15) trägt.

10. Etikettierstation für Gegenstände, insbesondere Flaschen mit mehreren, längs einer Bahn angeordneten Stationen, und zwar einer Beleimungsvorrichtung (26), einer Etikettenvorratsstation (27) und einer Etikettenübertragungsstation (28) sowie mit mindestens einem auf einem sich drehenden Träger (21) drehbar gelagerten und bei jeder Umdrehung des Trägers (21) an den Stationen (26,27,28) vorbeibewegten Entnahmeelement (22 bis 25) für die Etiketten, das jeweils eine nach außen gewölbte, sich auf dem jeweils vorderen Etikett der Etikettenvorratsstation (27) und den anderen Stationen abwälzende Aufnahmefläche für das Etikett aufweist, wobei als Antrieb für jedes Entnahmeelement (22 bis 25) ein Kurvengetriebe vorgesehen ist, das aus einer für alle Entnahmeelemente (22 bis 25) gemeinsamen, ortsfesten Doppelkurve (33,33a,33b,34,39,40,41) und einem oder mehreren damit zusammenwirkenden Eingrifssgliedern (32,35,36,38) besteht, die auf der Antriebswelle (31) oder einer mit ihr gekuppelten Lagerwelle mittels des Trägerelementes (1,2,1a,2a) nach einem der Ansprüche 1 bis 9 gelagert sind und durch Formschluß mit der Doppelkurve (33,33a,33b,34,39,40,41) bei Drehung des Trägers (21) die Drehbewegung eines jeden Entnahmeelementes (26 bis 28) sichern, **dadurch gekennzeichnet,** daß die Antriebswelle (31) bzw. Lagerwelle vor der Ebene der Eingriffsglieder (32,35,36,38) endet und das Trägerelement (1,2,1a,2a) für die wahlweise Bestückung mit einem einzigen Eingriffsglied (32) das mit einer als Nutkurve ausgebildeten Doppelkurve (33,33a,33b,34) im Eingriff steht, oder für zwei zur Achse der Antriebswelle (31) bzw. Lagerwelle etwa diametral gegenüberliegende Eingriffsglieder (35,36) eingerichtet ist, die mit einer ersten einseitigen Kurve (39) der Doppelkurve (39,40,41) zusammenwirken und ein Brückenglied (37) tragen, das zwischen der ersten Kurve (39) und einer zweiten, dazu im Abstand angeordneten Kurve (40) angeordnet ist und mit der zweiten Kurve (40) zusammenwirkende, zu den Eingriffsgliedern (35,36) der ersten Kurve (39) um etwa 90° versetzte Eingriffsglieder (38) trägt.

**Claims**

1. Support, mounted on a shaft (31), for the followers (32, 35, 36, 38) of a cam mechanism, in particular a drive for a label removal assembly (22 to 25) in a labelling station **wherein** the support consists of an outer body (2, 2a) and an inner body (1, 1a) arranged therein at an all-over equal spacing, the outer body (2, 2a) having jaws (8, 8a) pointing radially to the inside and the inner body (1, 1a) having jaws (6, 6a) pointing radially to the outside and lying between the jaws (8, 8a) pointing to the inside, the space between the two bodies (1, 1a, 2, 2a) being filled with an insert (3, 3a) of plastic material, and the jaws (8, 8a) of the outer body (2, 2a) pointing to the inside provide for mounting of the followers (32, 35, 36, 38).

2. Support, as set forth in claim 1, **wherein** the gaps between the jaws (8, 8a) of the outer body (2, 2a) are closed by a front wall (12, 12a), and the plastic insert (3, 3a) is arranged between said front wall (12, 12a) and the faces of the jaws (6, 6a) of the inner body (1, 1a) pointing to said front wall.

3. Support, as set forth in claim 1 or 2, **wherein** provision is made for annular surfaces axially extending between both bodies (1, 1a, 2, 2a), the elastic insert (3, 3a) being arranged between said annular surfaces.

4. Support, as set forth in claim 3, **wherein** the annular surfaces are formed by sleeve-shaped projections (16, 17) of the inner and outer bodies (1, 1a, 2, 2a) arranged coaxially above one another.

5. Support, as set forth in claim 3 or 4, **wherein** the annular surfaces steadily extend into the radially inner surfaces of the jaws (8a) of the outer body pointing to the inside and into the spaces lying between the jaws (6a) of the inner body (1a) pointing to the outside and incoporating the jaws (8a) of the outer body (2a).

6. Support, as set forth in claims 1 to 5, **wherein** provision is made in the inner and outer bodies (1, 1a, 2, 2a) for several radial recesses (13, 13a, 14, 14a) each of which is filled with a plug of elastic material connected with the elastic insert (3, 3a).

7. Support, as set forth in claim 6, **wherein** the recesses (13, 13a, 14, 14a) with the plug are provided at the outer circumference of the support.

8. Support, as set forth in claim 6 or 7, **wherein** the recesses (13, 13a, 14, 14a) flush in pairs with one another.

9. Support, as set forth in claims 1 to 3, **wherein** the outer body (2) has a drive pinion (15).

10. Labelling station for containers, in particular bottles, with several stations arranged along a track, namely a gluing station (26), a label magazine (27) and a label transfer station (28) as well as with at least one label removal segment (22 to 25) pivoted on a rotating support (21) and passing the stations (26, 27, 28) with each revolution of the support (21), said label removal segment (22 to 25) having a receiving surface for the label, each curved outwards and being rolled onto the respective forward label of the label magazine (27) and onto the other stations, a cam mechanism being provided as drive for each removal segment (22 to 25) which consists of a fixed double cam track (33, 33a, 33b, 34, 39, 40, 41) common for all removal segments (22 to 25) and one or several followers ( 32, 35, 36, 38) inter acting therewith which are mounted on the drive shaft (31) or a bearing shaft coupled with the former by means of the support (1, 2, 1a, 2a), as set forth in either of claims 1 to 9, and which ensure rotation of each removal segment (26 to 28) through positive connection with the double cam (33, 33a, 33b, 34, 39, 40, 41) when the support (21) is rotated, **wherein** the drive shaft (31) or bearing shaft, respectively, ends in front of the plane of the followers (32, 35, 36, 38) and the support (1, 2, 1a, 2a) is equipped alternatively for mounting of one follower (32) in mesh with a double cam (33, 33a, 33b, 34) designed as a grooved cam, or for mounting two followers (35, 36) about diametrically opposed to the axis of the drive shaft (31) or bearing shaft, respectively, which interact with a first one-sided cam (39) of the double cam (39, 40, 41) and have a bridging member (37) which is arranged between the first cam (39) and a second cam (40) arranged at a distance therefrom and which holds followers (38) interacting with the second cam (40), said followers being displaced by approx. 90° with respect to the followers (35, 36) of the first cam (39).

**Revendications**

1. Support monté sur un arbre (31), pour les suiveurs (32,35,36,38) d'un entraînement à came, en particulier d'un entraînement pour un preneur d'étiquettes (22 à 25), dans un poste d'étiquetage,

caractérisé en ce que le support se compose d'un corps extérieur (2,2a) et d'un corps intérieur (1,2a) disposé à l'intérieur, à distance dans toutes les directions, le corps extérieur (2,2a) présentant des griffes (8,8a) orientées radialement vers l'intérieur et le corps intérieur (1,a) présentant des griffes (6,6a) orientées radialement vers l'extérieur, placées entre les griffes (8,8a) orientées radialement vers l'intérieur, et l'espace intermédiaire entre les deux corps (1,2a,2,2a) étant rempli d'une garniture (3,3a) en matériau élastique, et en ce que les griffes (8,8a) orientées radialement vers l'intérieur, du corps extérieur (2,2a), sont équipées pour être munies de suiveurs (32,35,36,38).

2. Support selon la revendication 1,
caractérisé en ce que les vides entre les griffes (8,8a) du corps extérieur (2,2a) sont obturés par une paroi frontale (12,12a) et en ce que la garniture élastique (3,3a) est disposée entre cette paroi frontale (12,12a) et les surfaces frontales, leur étant associées, des griffes (6,6a) du corps intérieur (1,1a).

3. Support selon la revendication 1 ou 2,
caractérisé en ce que des surfaces annulaires, s'étendant axialement et entre lesquelles est disposée la garniture élastique (3,3a), sont prévues entre les deux corps (1,1a,2,2a).

4. Support selon la revendication 3,
caractérisé en ce que les surfaces annulaires sont formées par des appendices (16,17), en forme de douille, disposés coaxialement les uns au-dessus des autres, des corps intérieur et extérieur (1,1a,2,2a).

5. Support selon la revendication 3 ou 4,
caractérisé en ce que les surfaces annulaires se transforment progressivement en les surfaces radialement intérieures des griffes (8a) orientées vers l'intérieur, du corps extérieur, et en les espaces intermédiaires situés entre les griffes (6a), orientées vers l'extérieur, du corps intérieur (1a) et recevant les griffes (8a) du corps extérieur (2a).

6. Support selon l'une des revendications 1 à 5,
caractérisé en ce que plusieurs évidements radiaux (13,13a,14,14a) sont prévus dans les corps intérieur et extérieur (1,1a,2,2a) et remplis chacun d'un bouchon en matériau élastique, relié à la garniture élastique (3,3a).

7. Support selon la revendication 6,
caractérisé en ce que les évidements (13,13a,14,14a) sont prévus avec les bouchons situés à la périphérie extérieure du support.

8. Support selon la revendication 6 ou 7,
caractérisé en ce que les évidements (13,13a,14,14a) sont alignés entre eux par paires.

9. Support selon l'une des revendications 1 à 3,
caractérisé en ce que le corps extérieur (2) porte un pignon d'entraînement (15).

10. Poste d'étiquetage pour objets, en particulier bouteilles, avec plusieurs postes, disposés le long d'un circuit, à savoir un dispositif d'encollage (26), un poste de préparation d'étiquettes (27) et un poste de transmission d'étiquettes (28), ainsi qu'avec au moins un preneur d'étiquettes (22 à 25), monté à rotation sur un support rotatif (21) et défilant à chaque rotation du support (21) sur les postes (26,27,28), présentant chaque fois pour l'étiquette une surface d'application, incurvée vers l'extérieur, se déroulant chaque fois sur l'étiquette, placée en avant, du poste de préparation des étiquettes (27) et passant sur les autres postes, étant prévu comme entraînement pour chaque preneur (22 à 25), un entraînement à came composé d'une double came (33,33a,33b,34,39,40,41) fixe, commune à tous les preneurs (22 à 25), et d'un ou plusieurs suiveurs (32,35,36,38) coopérant avec elle et montés sur l'arbre d'entraînement (31) ou un arbre de palier lui étant accouplé, au moyen du support (1,2,1a,2a) selon l'une des revendications 1 à 9, et bloquant chacun le mouvement de rotation d'un preneur (26 à 28), par ajustement de forme avec la came double (33,33a,33b,34,39,40,471), lors de la rotation du support (21),
caractérisé en ce que l'arbre d'entraînement (31), respectivement l'arbre de palier s'achève avant le plan des suiveurs (32,35,36,38) et, pour assurer une application à volonté, le support (1,2,1a,2a) étant pourvu d'un unique suiveur (32), qui est contact avec une double came (33,33a,33b,34), réalisée sous forme de came en rainure, ou étant équipé pour deux suiveurs (35,36), à peu près diamétralement opposés par rapport à l'axe de l'arbre d'entraînement (31), respectivement l'arbre de palier, suivants (35,36) coopérant avec une première came à une face (39) de la came double (39,40,41) et portant un pont (37) disposé entre la première came (39) et une deuxième came (40), espacée par rapport à celle-ci, et qui porte des suiveurs (38), qui coopèrent avec la deuxième came (40), et sont décalés d'à peu près 90° par rapport aux suiveurs (35,36) de la première came (39).

A

1

4

2

6

3

11

9

13

8

B

Fig.1

Fig. 2

Fig.3

F

6a

8a

E

2a

15

Fig.4

Fig.5

Fig. 6

Fig. 7

Fig.8

Fig. 9